(19) Europäisches Patentamt
European Patent Office
Office européen des brevets

(11) Veröffentlichungsnummer: **0 211 107 B1**

(12) **EUROPÄISCHE PATENTSCHRIFT**

(45) Veröffentlichungstag der Patentschrift: 24.04.91

(51) Int. Cl.⁵: **G02B 6/44**

(21) Anmeldenummer: 85201254.1

(22) Anmeldetag: 30.07.85

(54) **Metallfreies Lichtwellenleiterkabel mit einer Kabelseele.**

(43) Veröffentlichungstag der Anmeldung:
25.02.87 Patentblatt 87/09

(45) Bekanntmachung des Hinweises auf die Patenterteilung:
24.04.91 Patentblatt 91/17

(84) Benannte Vertragsstaaten:
AT CH DE FR GB LI NL

(56) Entgegenhaltungen:
EP-A- 0 072 594
DE-A- 2 355 855
DE-A- 2 521 659
DE-A- 3 118 172

PATENT ABSTRACTS OF JAPAN, Band 7, Nr. 78 (P-188) [1223], 31. März 1983 & JP-A-58-7105

(73) Patentinhaber: **Philips Patentverwaltung GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)CH FR GB LI NL AT**

(72) Erfinder: **Brüggendieck, Siegfried**
**Amselweg 20**
**W-5608 Radevormwald(DE)**
Erfinder: **Nolting, Karl-Heinz**
**Jugendstrasse 12**
**W-5013 Elsdorf(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

**Beschreibung**

Die Erfindung bezieht sich auf ein metallfreies Lichtwellenleiter(LWL-)Kabel mit einer Kabelseele, welche aus einem Zentralelement aus glasfaserverstärktem Kunststoff und darum gleichmäßig nebeneinander verseilten, aus Lichtwellenleitern und gegebenenfalls Trensen bestehenden Verseilelementen aufgebaut ist und mit einer vom Kabelmantel abgedeckten Bewehrung aus die Scele umgebenden, verseilten glasfaserverstärkten Kunststoffsträngen.

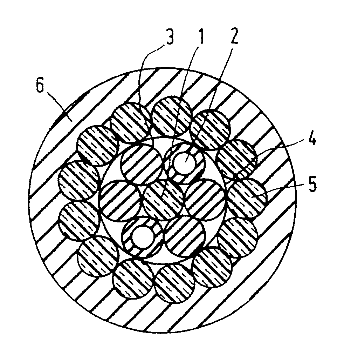

Ein solches metallfreies LWL-Kabel ist z.B. aus der EP-A-072 594 (Figur 2) bereits bekannt.

Bei Luftkabeln kommt es darauf an, das Verhältnis von eingesetztem Material zum tragenden Material klein zu halten, weil durch ein vermindertes Gewicht bei gleicher Menge tragender Elemente die Zugfestigkeit der Kabel insgesamt gesteigert wird. Mit der Einsparung von Material ergibt sich auch ein dünneres Kabel, was die Flexibilität erhöht. Bei Luftkabeln war es bekannt, um die verdrallte Seele einen Zwischen-Mantel zu legen (Siehe z.B. EP-A- 072594), der die Aufgabe hatte, die Seele des Luftkabels gegen das Eindrücken durch die Bewehrung zu schützen und gleichzeitig die Seele feuchtigkeitsdicht abzuschließen.

Der Erfindung liegt die Aufgabe zugrunde, ein Luftkabel mit Lichtwellenleitern aufzubauen, das bei möglichst geringem Gewicht eine möglichst geringe Dicke hat und hochflexibel ist. Zur Lösung dieser Aufgabe wird gemäß der Erfindung vorgeschlagen, den die Seele umschließenden Zwischenmantel üblicher Bauart dadurch zu vermeiden, daß die glasfaserverstärkten Kunststoffstränge der Bewehrung ohne mechanisch festen Zwischenmantel in gegenläufiger Richtung zu den Verseilelementen der Seele um diese verseilt sind, und daß der Verseilschlag der Verseilelemente der Seele mindestens um den Faktor acht kleiner als derjenige der glasfaserverstärkten Kunststoffstränge der Bewehrung ist.

Zur Erzielung einer guten Tragfähigkeit der Seele ist es vorteilhaft, den Verseilelementen der Seele gleichen Querschnitt und annähernd gleiche Druckfestigkeit zu geben.

Anhand der Zeichnung wird ein Ausführungsbeispiel der Erfindung beschrieben.

Die Figur zeigt einen Querschnitt eines LWL-Luftkabels, dessen Seele aus einem glasfaserverstärkten Kunststoffstrang 1 als Zentralelement, zwei LWL-Leitern 2 und vier Trensen 3 besteht. Um diese verdrallte Seele ist ohne Zwischenmantel nur ein weiches Quellflies 4 gelegt, das aus einem Kunststoffband mit eingelagertem quellfähigem Pulver besteht. Um die Seele sind dann die glasserverstärkten Kunststoffstränge 5 verdrallt aufgelegt. Schließlich umschließt ein an sich bekannter Mantel 6 das Kabel zum Schutz gegen äußere Einflüsse.

Durch den sehr kurzen Verseilschlag der Seele, z. B. 80 mm Schlaglänge, und den verhältnismäßig großen Schlag (800 mm) für die Bewehrung 5 sowie die gegenläufige Schlagrichtung von Seele und Bewehrung ergibt sich ohne Zwischenmantel eine hohe Tragfähigkeit der Seele gegenüber der Bewehrung während der Kabelherstellung. Ist die Bewehrung durch den äußeren Mantel zentriert, so ergibt sich durch die Bewehrung ein selbsttragendes Gewölbe, so daß auch eine hohe Zugbeanspruchung durch die Bewehrung aufgenommen wird. Die Seele wird also nicht eingedrückt. Mit den angegebenen unterschiedlichen Schlaglängen und der gegenläufigen Schlagrichtung ergeben sich Kreuzungswinkel zwischen Seele und Bewehrung, die einen Winkel von mehr als 70° einschließen.

**Ansprüche**

1. Metallfreies Lichtwellenleiterkabel mit einer Kabelseele (1, 2, 3), welche aus einem Zentralelement (1) aus glasfaserverstärktem Kunststoff und darum gleichmäßig nebeneinander verseilten, aus Lichtwellenleitern (2) und gegebenenfalls Trensen (3) bestehenden Verseilelementen (2, 3) aufgebaut ist und mit einer vom Kabelmantel (6) abgedeckten Bewehrung (5) aus die Seele umgebenden, verseilten glasfaserverstärkten Kunststoffsträngen, dadurch gekennzeichnet , daß die glasfaserverstärkten Kunststoffstränge (5) der Bewehrung ohne mechanisch festen Zwischenmantel in gegenläufiger Richtung zu den Verseilelementen (2, 3) der Seele um diese verseilt sind, und daß der Verseilschlag der Verseilelemente (2, 3) der Seele mindestens um den Faktor acht kleiner als derjenige der glasfaserverstärkten Kunststoffstränge (5) Bewehrung ist.

2. Metallfreies Lichtwellenleiterkabel nach Anspruch 1, dadurch gekennzeichnet , daß die Verseilelemente (2, 3) der Seele gleichen Querschnitt und annähernd gleiche Druckfestigkeit haben.

3. Metallfreies Lichtwellenleiterkabel nach Anspruch 1 oder 2, dadurch gekennzeichnet , daß die Elemente von Seele (1, 2, 3) und Bewehrung (5) einen Winkel von mehr als 70° einschließen.

4. Metallfreies Lichtwellenleiterkabel nach einem der Ansprüche 1 bis 3, dadurch gekennzeichnet , daß die glasfaserverstärkten Kunststoffstränge (5) der Bewehrung unmittelbar um die Verseilelemente (2, 3) der Seele verseilt sind.

5. Metallfreies Lichtwellenleiterkabel nach einem der Ansprüche 1 bis 4, dadurch gekennzeichnet , daß zwischen Seele (1, 2, 3) und Bewehrung (5) eine quellfähige Schicht (4), vorzugsweise durch Wickeln, eingelegt ist.

## Claims

1. A non-metallic optical waveguide cable comprising a cable core (1, 2, 3) which is composed of a central element (1) of glass fibre-reinforced synthetic resin around which elements (2, 3) are twisted in a uniform juxtaposed manner, which elements consist of optical waveguides (2) and optionally strands (3), and comprising an armour (5) which consists of twisted glass fibre-reinforced synthetic resin strands surrounding the core is covered by the cable sheath (6), characterized in that the glass fibre-reinforced synthetic resin strands (5) of the armour are twisted without any mechanically fixed intermediate cladding around the core elements (2, 3) in a direction opposite to said elements, and in that the twist length of the core elements (2, 3) is at least a factor of eight smaller than the twist length of the glass fibre-reinforced synthetic resin strands (5) of the armour.

2. A non-metallic optical waveguide cable as claimed in Claim 1, characterized in that the core elements (2, 3) have an equal cross-section and an approximately equal compressive strength.

3. A non-metallic optical waveguide cable as claimed in Claim 1 or 2, characterized in that the elements of the core (1, 2, 3) and the armour (5) enclose an angle larger than 70°.

4. A non-metallic optical waveguide cable as claimed in any one of the Claims 1 up to and including 3, characterized in that the glass fibre-reinforced synthetic resin strands (5) of the armour are twisted directly around the core elements (2, 3).

5. A non-metallic optical waveguide cable as claimed in any one of the Claims 1 up to and including 4, characterized in that an expandable layer (4) is provided between the core (1, 2, 3) and the armour (5), preferably by winding.

## Revendications

1. Câble guide d'ondes non métallique muni d'une âme de câble (1, 2, 3) qui est formée par un élément central (1) en matière synthétique renforcée de fibre de verre autour duquel sont câblés d'une façon uniformément juxtaposée des éléments de câblage (2, 3) constitués par des guides d'ondes lumineuses (2) et, le cas échéant, des fils torsadés (3) et d'une armure (5) recouverte d'une gaine de câble (6) et constituée par des cordons en matière synthétique renforcée de fibre de verre cordonnés entourant l'âme, caractérisé en ce que les cordons en matière synthétique renforcée de fibre de verre (5) de l'armure sont câblés sans gaine intermédiaire mécaniquement solide en sens opposé par rapport à celui des éléments de câblage (2, 3) de l'âme autour de cette dernière et en ce que le pas de câblage des éléments de câblage (2, 3) de l'âme est inférieur d'au moins un facteur huit à celui des cordons en matière synthétique renforcée de fibre de verre (5) de l'armure.

2. Câble guide d'ondes non métallique selon la revendication 1, caractérisé en ce que les éléments de câblage (2, 3) de l'âme présentent la même section et pratiquement la même résistance à la compression.

3. Câble guide d'ondes non métallique selon la revendication 1 ou 2, caractérisé en ce que les éléments de l'âme (1, 2, 3) et l'armure (5) forment un angle supérieur à 70°.

4. Câble guide d'ondes non métallique selon l'une des revendications 1 à 3, caractérisé en ce que les cordons en matière synthétique renforcée de fibre de verre (5) de l'armure sont câblés immédiatement autour des éléments de câblage (2, 3) de l'âme.

5. Câble guide d'ondes non métallique selon l'une des revendications 1 à 4, caractérisé en ce qu'une couche gonflable (4) est insérée, de préférence par enroulement, entre l'âme (1, 2, 3) et l'armure (5).